# EUROPEAN PATENT SPECIFICATION

(11) **EP 3 316 066 B1**
(45) Date of publication and mention of the grant of the patent: **25.09.2019**
(21) Application number: 17198571.6
(22) Date of filing: 26.10.2017
(51) Int. Cl.: G05D 1/02

(54) **METHOD FOR DETERMINING AT LEAST A PART OF A BORDER**
VERFAHREN ZUR BESTIMMUNG ZUMINDEST EINES TEILS EINER GRENZE
PROCÉDÉ POUR DÉTERMINER AU MOINS UNE PARTIE D'UNE BORDURE

(30) Priority: 26.10.2016 DE 102016120461
(43) Date of publication of application: 02.05.2018
(73) Proprietor: Einhell Germany AG, 94405 Landau / Isar (DE)
(72) Inventor: Guggenberger, Martin, 84164 Moosthenning (DE); Waldher, Rainer, 84367 Tann (DE); Thannhuber, Dr. Markus, 94405 Landau an der Isar (DE)
(74) Representative: Wittmann, Ernst-Ulrich

(56) References cited:
- DE-A1-102007 053 008
- US-A1- 2010 076 599
- US-A1- 2012 265 391
- MILOS STOJMENOVIC ET AL: "Measuring Linearity of a Finite Set of Points", CYBERNETICS AND INTELLIGENT SYSTEMS, 2006 IEEE CONFERENCE ON, IEEE, PISCATAWAY, NJ, USA, 1 June 2006 (2006-06-01), pages 1-6, XP031020046, ISBN: 978-1-4244-0023-2

## Description

The present invention relates to the field of determining a border, at least a part of a border. Methods like these are used to limit the activities of a technical device, for instance moveable object or a robot, to a predefined area.

On the one hand, coming out of this area may be dangerous, illegal, or simply not desired for the moveable object. On the other hand, said moveable object should be able to cover the complete area; otherwise, machines like harvesters, mine sweepers, vacuum cleaners, and many others that use a method like this, would not be considered to work properly.

Furthermore, the border should be recorded by automatic means; in devices of the state of the art this often contradicts to above requirements. In some cases, existing methods leave gaps in the area to be covered. In other cases, borders of the area are overrun.

For example, US 2012/265391 A1 discloses a method of establishing an area of confinement and an autonomous robot for performing a task within the area of confinement.

US 2010/076599 A1 discloses a robotic device that is manually driven along a perimeter of a region or path of interest for future autonomous operation.

DE 10 2007 053008 A1 discloses a class of target bodies whose surface reflects or emits only two different types of light and is designed so that the boundaries between the two types of light, viewed from any spatial direction, appear as straight lines.

With this background, it is an object of the present invention to provide a method that improves or, at least partly, overcomes the disadvantages of the state of the art.

These and further benefits are set out in claim 1. Further embodiments and optional features of the present invention are set out in the dependent claims.

The present invention discloses a method for determining at least a part of the border for a moveable object in a physical area.

The border comprises a set of border locations of the physical area. Border locations are positions in a 2-dimensional or 3-dimensional physical area. The physical border locations are associated to n-tuples of border locations.

For determining the border, or at least a part of it, at least a first ordered set of reference locations of the physical area is used. The reference locations of the first set are associated to a set of corresponding n-tuples, wherein the set of n-tuples specifies the positions of the corresponding reference locations in the physical area.

The reference locations are usually obtained by moving a recording device along a physical contour, which shall be defined as the physical border. During this moving, the recording device records reference locations periodically, for instance every second. Depending on the required precision of these reference locations, conditions of the terrain, precision of the recording device, etc., recording frequency may be higher or lower. Due to intrinsic imprecisions or uncertainties of the recording procedure, the reference locations recorded this way differ - at least slightly - from ideal reference locations. This may lead to imprecise definition of the border or to unnecessary zic-zac of the border line. One strategy to cope with this would be to smoothen the border line, e.g. by using an interpolation method, like spline interpolation, of the reference locations. However, this would also smoothen edges, corners or the like, and thus lead away from ideal reference locations. This would lead to gaps within the area to be covered.

To avoid, at least partially, disadvantages like these, the method of the present invention performs following steps, at least:
a) Retrieving from the storage device at least an n-tuple associated to a first reference location of the first set;
b) Retrieving from the storage device at least a set of n-tuples associated to a plurality of second locations of the first set;
c) Selecting from the plurality of n-tuples associated to the second locations a subset comprising nearest, in relation to the n-tuple associated to the first location, n-tuples associated to nearest second locations;
d) Computing a linearity estimation, by using a first computational procedure, of the nearest n-tuples associated to the nearest second locations;
e) Determining a centre n-tuple associated to a centre location of the nearest second locations and storing the centre n-tuple associated to the centre location in the storage device as a border element that is part of the border, if the linearity estimation is above a predefined threshold.

The set of n-tuples associated to the reference locations are stored in a storage device. This makes the n-tuples - and the positions associated with them - accessible for computing systems. The storage device could be made of semiconductors, of magnetic or optic means, or other means to store and/or to handle information.

In step a), at least an n-tuple associated to a first reference location of the first ordered set is retrieved from the storage device. The order of the first ordered set is usually given by the sequence the reference locations have been recorded by the recording device during the recording procedure.

In step b), at least a set of n-tuples associated to a plurality of second locations of the first set is retrieved from the storage device. The number of n-tuples retrieved typically ranges between 5 and 200. The main criterion to select this plurality of second locations is their vicinity to the n-tuple associated to a first reference location, which has been retrieved in step a).

In step c), from the plurality of n-tuples, which have been retrieved in step b), a subset is selected that comprises the nearest n-tuples, in relation to the n-tuple associated to the first location, which has been retrieved in step a).

In step d), a linearity estimation is computed of the nearest n-tuples associated to the nearest second locations. This is done by using a first computational procedure.

In step e), a centre n-tuple is determined associated to a centre location of the nearest second locations. If the linearity estimation, as computed in step e), is above a predefined threshold, this centre n-tuple, which is associated to the centre location, is stored in the storage device as a border element that is part of the border.

In some embodiments, a second set of reference locations is used. The second set of reference locations may include the first ordered set of reference locations. Alternatively, the second set may consists of the first ordered set of reference locations, only. Or, the second set may as well include a plurality of additional reference locations. These additional reference locations are usually obtained by moving the recording device several times - e.g. 2 to 10 times - along a physical contour which shall be defined as the physical border.

Based on this second set of reference locations, step b) is replaced by step b2), where from the storage device at least a set of n-tuples associated to a plurality of second locations of the second set is retrieved.

This embodiment has the advantage of increasing the number of second locations that are used for computing the linearity estimation (step d) and determining the centre n-tuple (step e). Note that the sequence of recording and storing this second set does not play any role, because only the nearest are selected (in step c). This eases the recording procedure considerably.

In some embodiments, the centre n-tuple is the mass centre of the nearest n-tuples or the weighted mass centre of the nearest n-tuples.

The centre n-tuple of the nearest n-tuples can be computed in several ways. One method is to compute the mass centre of these nearest n-tuples. Another method is to attribute the nearest n-tuples with a weight. Examples for weights are: Depending on the recording device, e.g. higher weights for better recording quality; depending on the linearity estimation, e.g. higher weights for points with higher linearity or higher weights for points with linearity above a predefined threshold.

In some embodiments, the centre n-tuple is determined by performing the steps of:
- Repeating steps c) and d) for a predefined number of subsets comprising nearest n-tuples, wherein each of said subsets has a different cardinality;
- Selecting, after step e), the centre n-tuple for the subset with highest linearity estimation, of the predefined number of subsets comprising nearest second locations.

The number of nearest n-tuples is not constant and may vary for each n-tuple associated to a first reference location of the first set (as retrieved in step a). The number of nearest n-tuples selected may be determined by a predefined threshold of the linearity estimation, i.e. only those nearest n-tuples are selected that are above this predefined threshold. Another criterion for selecting the nearest n-tuples can be to limit their number, i.e. take a subset with n nearest n-tuples. Cardinality n of this set is between 5 and 200, preferably between 10 and 60, most preferably between 20 and 40, elements.

Some embodiments vary the cardinality of said subsets systematically, e.g. from 20 to 40 elements, determine for each of these subsets its linearity estimation, and then (after step e), select the centre n-tuple for the subset with highest linearity estimation.

In the present invention, a third ordered set of reference locations, associated to a set of corresponding n-tuples, is computed, further comprising the steps of:
- Storing, after step e), the centre n-tuple associated to the centre location in the storage device as a non-gap n-tuple associated to a non-gap element that is part of the third set, if the linearity estimation is above the predefined threshold, or storing the centre n-tuple associated to the centre location in the storage device as a gap n-tuple associated to a gap element that is part of the third set, if the linearity estimation is below the predefined threshold, as part of the third ordered set of n-tuples;
- Computing a corner n-tuple associated to a corner element that is part of the border, by using a second computational procedure, wherein the second computational procedure is based on gap n-tuples and non-gap n-tuples.

Said third ordered set of reference locations consists of gap n-tuples and non-gap n-tuples. The centre n-tuple (step e) is stored as non-gap n-tuple, if the linearity estimation is above a predefined threshold. This predefined threshold of non-gap n-tuples is preferably above 0.9, most preferably above 0.93. The centre n-tuple (step e) is stored as gap n-tuples, if it is not a non-gap n-tuple according to the definition above.

Hence, the third ordered set of reference locations consists of centre n-tuples, as determined in step e), that are either gap n-tuples or non-gap n-tuples. This third ordered set is used to compute at least one corner n-tuple, by performing a second computational procedure. Said second computational procedure removes the gap n-tuples and substitutes this gap by determining at least one n-tuple that is between the remaining non-gap n-tuples; this n-tuple is called corner n-tuple.

In the present invention, the second computational procedure determines for each subset of gap n-tuples the corner n-tuple associated to the corner element, that is part of the border, by computing a first linear correlation line of the non-gap n-tuples before said subset of gap n-tuples and a second linear correlation line of the non-gap n-tuples after said subset of gap n-tuples and the corner n-tuple as the intersection of the first linear correlation line and the second linear correlation line.

Hence, the second computational procedure first searches in the third ordered set of reference locations for a successional subset of gap n-tuples, with cardinality greater than or equal to one. Then, the procedure removes the gap n-tuples; this leads to a gap in said third ordered set. In consequence, subsets "before this gap" and a "after this gap" arise from this removing. These subsets maybe limited by a predefined number, e.g. 5 n-tuples subset "before this gap" and 5 n-tuples "after this gap" are selected. Another limitation may be to select all the n-tuples "before this gap" back to the last gap and all the n-tuples "after this gap" to the next gap.

Then, a first linear correlation line of the non-gap n-tuples before the gap, i.e. before said subset of gap n-tuples, and a second linear correlation line of the non-gap n-tuples after the gap, i.e. after said subset of gap n-tuples, is computed. The intersection of the first linear correlation line and the second linear correlation line is the corner n-tuple, which substitutes the gap n-tuples of this gap.

This second computational procedure is performed for each successional subset of gap n-tuples between non-gap n-tuples.

In some embodiments, the first computational procedure is further based on determining a centre n-tuple associated to a centre location of the nearest second locations, wherein, after computing a first line that is the linear correlation of the nearest second locations and a second line that is perpendicular on the first line, linearity estimation is result of the quotient of the squares of the distances to the first line and the squares of the distances to the second line.

In this embodiment of the first computational procedure, which provides a linearity estimation, first the centre n-tuple is computed, based on the nearest second locations, by using one of the methods disclosed above. Then, a first line is computed that is the linear correlation of the nearest second locations. Subsequently, a second line that is perpendicular on the first line is computed. The second line crosses the first line in the centre n-tuple. By using these lines, linearity estimation is the result of the quotient of the squares of the distances to the first line and the squares of the distances to the second line.

In some embodiments, the linearity estimation is result of an excentricity computation of the nearest n-tuples (614, 615).

There are several methods known that perform a linearity estimation. One of these methods is disclosed e.g. in paper "Stojmenović, M.; Nayak, A.; Zunic, J.: Measuring Linearity of a Finite Set of Points. IEEE 2006".

In some embodiments, uncertainties of the first reference locations, of the second locations, and of border elements are numerically considered.

Uncertainties may have been produced from the recording procedure, by using the recording device, as pointed out above. For many of existing recording devices, an estimation is given for errors or uncertainties related to each of the first reference locations and/or of the second locations recorded. These uncertainties are numerically considered, e.g. by computing several border elements, e.g. one without errors, one with maximal errors in each direction, etc. After this computing, each border element is computed by taking the average or the weighted average of above results.

In some embodiments, both the first and the second set of reference locations is determined by moving the moveable object in a physical area, by determining each reference location and storing the n-tuples associated to the reference locations in the storage device. This can also be achieved by a machine that carries said recording device or the moveable object, along a physical contour.

For this purpose, said moveable object is equipped with an electronic control unit that is able to execute the methods described above.

The invention will best be understood from the following detailed description of some embodiments of the invention shown in the accompanying drawings, wherein:
- **Fig. 1a**: depicts schematically an area where first reference locations are obtained by a recording device along a physical contour;
- **Fig. 1b**: depicts schematically an area where second reference locations are obtained by a recording device along a physical contour;
- **Fig. 2**: depicts schematically border elements determined by a method according to state of the art;
- **Fig. 3a**: depicts schematically a set of n-tuples with low linearity estimation;
- **Fig. 3b**: depicts schematically a set of n-tuples with high linearity estimation;
- **Fig. 4**: illustrates some methods implemented in the present invention;
- **Fig. 5**: depicts schematically a set of non-gap elements and gaps between these non-gap elements;
- **Fig. 6**: depicts schematically an example for linearity estimations and a predefined threshold;
- **Fig. 7**: depicts schematically a corner element and its neighbours;
- **Fig. 8**: depicts schematically a border with corner elements according to the present invention.

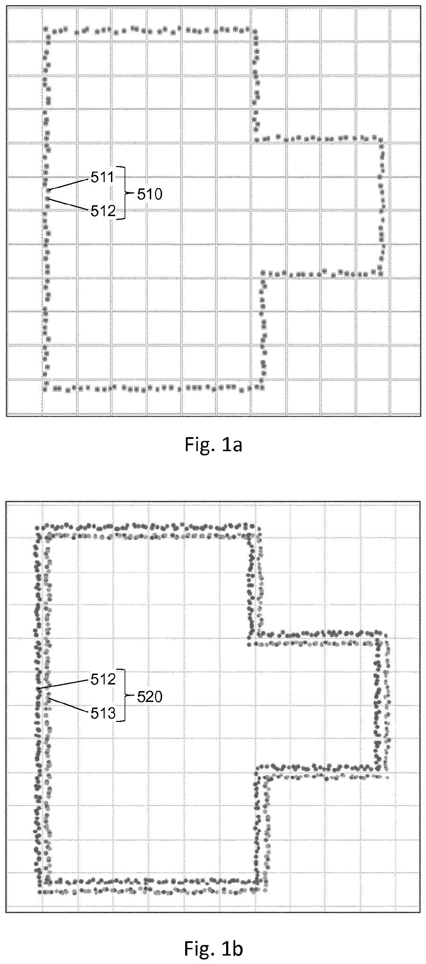

In **Fig. 1a** an area is shown schematically with first set of reference locations 510, comprising a plurality of first locations 511, 512. The points shown stand for reference locations in a physical area, obtained by a recording device along a physical contour. The reference locations are recorded and stored sequentially, e.g. the recording device has been moved counter-clockwise. In the example shown, reference location 512 is stored after reference location 511.

**Fig. 1b** depicts schematically an area where a set of second reference locations 520 are obtained by a recording device along a physical contour, comprising a plurality of second locations 512, 513. Note that the first set of reference locations 510 may be a subset of the set of second reference locations 520. The set of second reference locations 520 is not necessarily ordered, e.g. there is no order between second locations 512, 513. Usually, the set of second reference locations 520 contains more elements than the first set of reference locations 510.

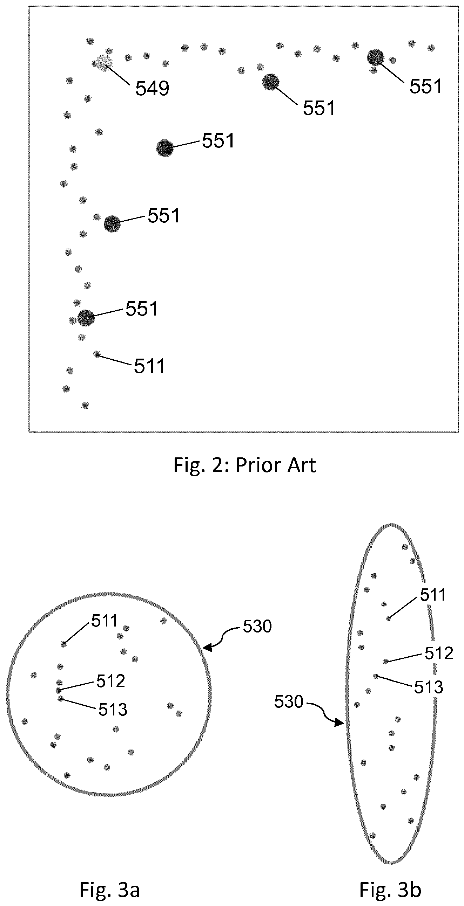

**Fig. 2** depicts schematically border elements 551 determined by a method according to state of the art. The plurality of first locations 511, 512 is shown as small dots, the border elements 551 and border corner location 549 are shown as big dots. It is clearly visible that smoothening the plurality of first locations 511 leads, as a result, to a set of border locations 551 that avoids zic-zac of the border line. However, the set of border locations 551 does not include border corner location 549.

**Fig. 3a** and 3b give an idea of the meaning of a linearity estimation: The plurality of first locations 511, 512, 513 - associated to a set of n tuples 611, 612, 613 - of **Fig. 3a** lies within a "quite round" ellipse. Hence, this set of first locations 511, 512, 513 has a low linearity estimation. In contrary, the plurality of first locations 511, 512, 513 of **Fig. 3b** lies within a "quite longish" ellipse, where the y-extension of this ellipse is significantly longer than its x-extension. As a result, this set of first locations 511, 512, 513 has a high linearity estimation.

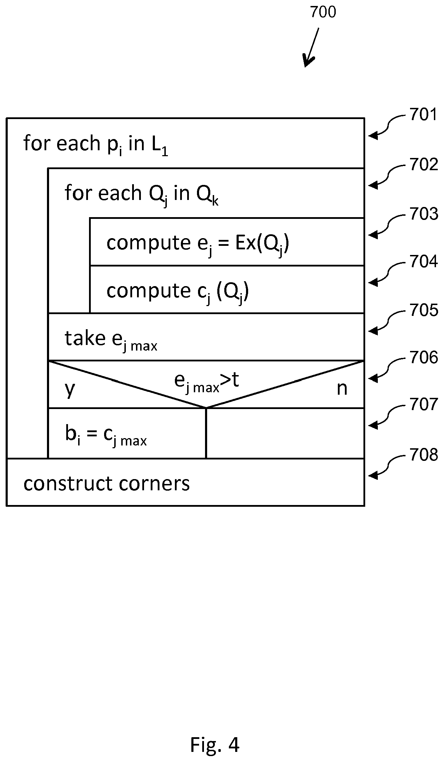

Procedure 700 of **Fig. 4** illustrates some methods implemented in the present invention. Loop 701 is executed for each position pᵢ, which is in first set of reference locations L₁ 510, i.e. from step 702 to 707. Loop 702 is executed for each subset Qⱼ of nearest second locations Qₖ 514, 515. Nearest second locations Qₖ are elements of second set of reference locations 520; they are limited either by their number or by some distance threshold. In step 703, for each subset Qⱼ linearity estimation eⱼ of subset Qⱼ is computed, by using a first computational procedure. In step 704, for this subset Qⱼ centre n-tuple cⱼ 619 of subset Qⱼ is determined.

After having computed the linearity estimation of at least 2, preferably between 20 and 40, subsets, the centre n-tuple cⱼ 619 of subset Qⱼ with highest linearity estimation e_{j max} is selected, step 705. In cases when highest linearity estimation e_{j max} is above a predefined threshold t, as determined in step 706, the centre n-tuple cⱼ 619 becomes non-gap element 541 and element 551 of non-gap element 541. Otherwise, centre n-tuple cⱼ 619 becomes gap element 542.

After having determined all non-gap elements 541 and gap elements 542, corners are constructed according to the second computational procedure, step 708.

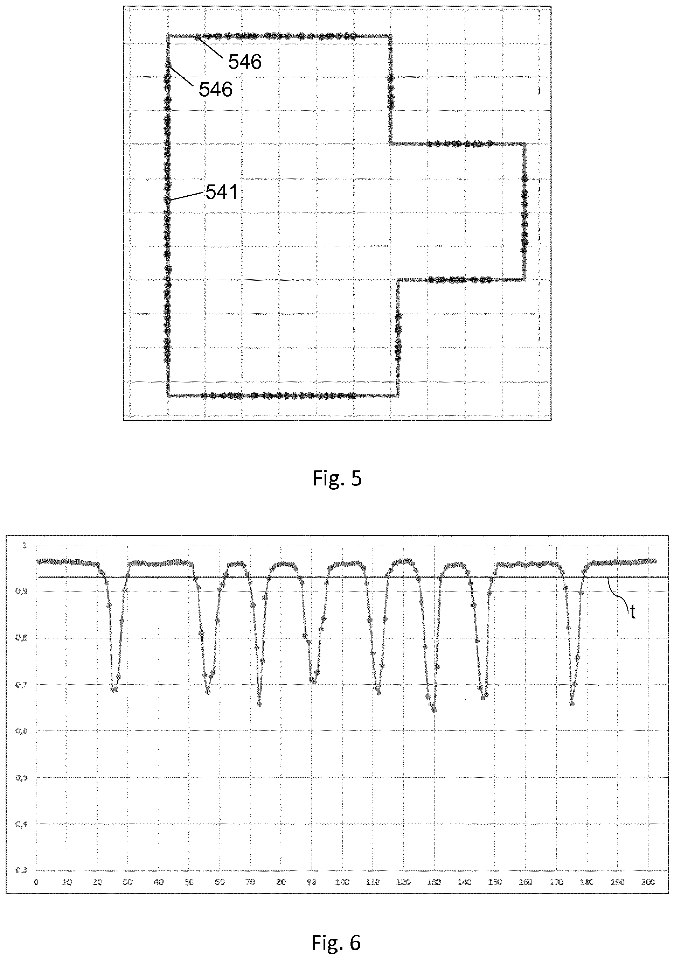

**Fig. 5** depicts schematically a set of non-gap elements 541, of the third ordered set of reference locations 540, and gaps between them. A centre n-tuple - as determined by step e) - is stored as non-gap n-tuple, if the linearity estimation is above a predefined threshold. This predefined threshold t of non-gap n-tuples is preferably above 0.9, most preferably above 0.93. There may be implementations where the predefined threshold t is lower or higher or adaptive, depending on the area to be covered. The centre n-tuple (step e) is stored as gap n-tuple, if it is not a non-gap n-tuple, i.e. when its linearity estimation is below the predefined threshold t. The gaps between the non-gap elements 541, particularly between special non-gap elements 546, are created by the second computational procedure by removing the gap n tuples from said third ordered set 540 of reference locations.

**Fig. 6** depicts an example how the linearity estimations (y-axis) of the elements of the third ordered set of reference locations 540 may be distributed. Reference locations 540 are ordered numerically, from 0 to about 200 (x-axis). Reference locations 0 to 20 have linearity estimations well above 0.95, i.e. above the predefined threshold t. Between reference locations 21 to 30 there is an incision, with a minimum below 0.7 at reference locations 25 and 26. Reference locations 31 to 51 are above 0.95 again, with an incision and a minimum below 0.7 at reference location 56, and so on. A line that represents the predefined threshold t is drawn at a linearity estimation of 0.93. Consequently, centre n-tuples (according to step e) are stored as non-gap n-tuples 641, which are associated to non-gap elements 541, if the linearity estimation is above predefined threshold t. Centre n-tuples below line t are stored as gap n-tuples 642.

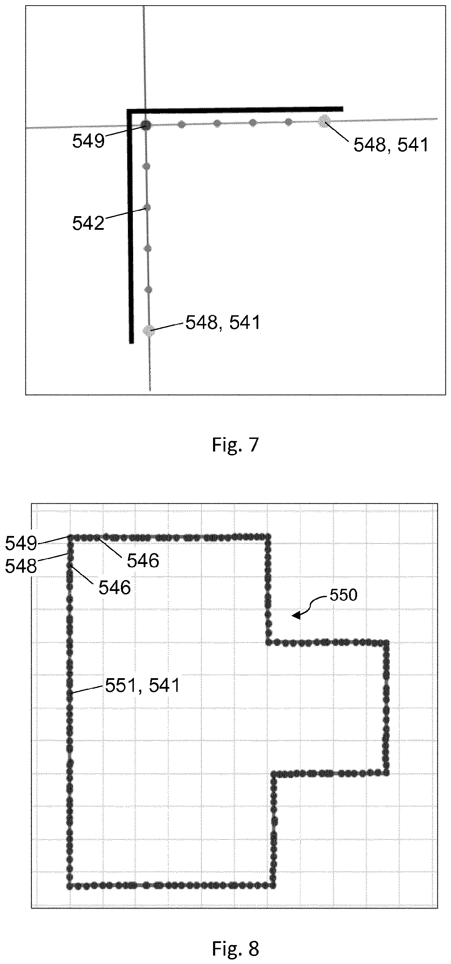

**Fig. 7** depicts schematically a corner element and its neighbours. As elaborated above, all the elements of the third ordered set of reference locations 540 between special non-gap elements 546 have been removed from this set by second computational procedure. Then, border corner location 549 is computed. For this, a first linear correlation line of the non-gap n-tuples before the gap is computed; then, a second linear correlation line of the non-gap n-tuples after the gap. In the next step, the intersection of the first linear correlation line and the second linear correlation line is constructed. This is the corner n-tuple, which substitutes the gap n-tuples of this gap. Between border corner location 549 and special non-gap elements 546 some gap-filling elements 548 may be inserted. This has the advantage of giving nearly equidistant elements, which is quite useful for a user of the methods of this invention, because it eases the move and further computations for moveable objects 10.

**Fig. 8** depicts schematically a border 550 according to the present invention. Border 550 consists of a set of border locations 551, 552. Border 550 contains non-gap elements 541, possibly border corner locations 549, and possibly gap-filling elements 548.

### List of Reference Signs

- 10: moveable object
- 20: electronic control unit, ECU
- 300: storage device
- 510: first set of reference locations
- 511: first location (511) of the first set (510)
- 511..515: plurality of first locations
- 514,515: nearest first locations
- 519: centre location
- 520: second set of reference locations
- 540: third set of reference locations (gap locations)
- 541: non-gap element
- 542: gap element
- 546: special non-gap element
- 548: gap-filling elements
- 549: border corner location
- 550: non-gap element
- 551, 552: set of border locations
- 610: first set of n-tuples of reference locations
- 611: n-tuple (coordinate) of first reference location
- 611..615: plurality of n-tuples of first locations
- 614, 615: n-tuples of nearest first locations
- 619: n-tuple of centre location
- 620: second set of n-tuples of reference locations
- 640: third set of n-tuples (gap n-tuples)
- 641: non-gap n-tuple
- 642: gap n-tuple
- 649: n-tuple of border corner location
- 650: n-tuples of border
- 651, 652: set of n-tuples of border locations
- 700, 710 to 780: procedure, steps of procedure 700
- cⱼ: centre of subset Qⱼ
- eⱼ: excentricity of subset Qⱼ
- L₁: first set of reference locations
- pᵢ: position, in first set of reference locations
- Qⱼ: subset of nearest second locations
- Qₖ: nearest second locations
- t: predefined threshold

## Claims

1. Method for determining at least a part of the border (550) for a moveable object (10) in a physical area by using at least a first ordered set (510) of reference locations of the physical area,
wherein the border (550) comprises a set of border locations (551, 552) of the physical area, wherein the reference locations of the first set (510) are associated to a set of corresponding n-tuples (610), wherein the set of n-tuples (610) specifies the positions of the corresponding reference locations (510) in the physical area,
wherein the set of n-tuples (610) associated to the reference locations of the first set (510) are stored in a storage device (300),
**characterized in that** said method comprises at least the steps of:
a) retrieving from the storage device (300) at least an n-tuple (611) associated to a first reference location (511) of the first set (510);
b) retrieving from the storage device (300) at least a set of n-tuples (612, 613) associated to a plurality of second locations (512, 513) of the first set (510);
c) selecting from the plurality of n-tuples (612, 613) associated to the second locations (512, 513) a subset comprising nearest, in relation to the n-tuple (611) associated to the first location (511), n-tuples (614, 615) associated to nearest second locations (514, 515);
d) computing a linearity estimation, by using a first computational procedure, of the nearest n-tuples (614, 615) associated to the nearest second locations (514, 515);
e) determining a centre n-tuple (619) associated to a centre location (519) of the nearest second locations (525, 526) and
storing the centre n-tuple (619) associated to the centre location (519) in the storage device (300) as a border element (551) that is part of the border (550), if the linearity estimation is above a predefined threshold,
the method further comprising using a third ordered set of reference locations (540), associated to a set of corresponding third ordered set of n-tuples (640), which comprises steps of
- storing, after step e), the centre n-tuple (619) associated to the centre location (519) in the storage device (300) as a non-gap n-tuple (641) associated to a non-gap element (541) that is part of the third ordered set of reference locations (540), if the linearity estimation is above the predefined threshold, or
storing the centre n-tuple (619) associated to the centre location (519) in the storage device (300) as a gap n-tuple (642) associated to a gap element (542) that is part of the third ordered set of reference locations (540), if the linearity estimation is below the predefined threshold, as part of the third ordered set of n-tuples (640), and
- computing a corner n-tuple (649) associated to a corner element (549) that is part of the border (550), by using a second computational procedure, wherein the second computational procedure is based on gap n-tuples (642) and non-gap n-tuples (641), and
using the subset of non-gap n-tuples (641) and gap n-tuples (642) that are part of the third ordered set of reference locations (540),
wherein the second computational procedure determines for each subset of gap n-tuples (642) the corner n-tuple (649) associated to the corner element (549), that is part of the border (550),
by computing a first linear correlation line of the non-gap n-tuples (641) before said subset of gap n-tuples (642) and a second linear correlation line of the non-gap n-tuples (641) after said subset of gap n-tuples (642) and the corner n-tuple (649) as the intersection of the first linear correlation line and the second linear correlation line.

2. Method according to claim 1,
using a second set (520) of reference locations, that may include the first ordered set (510) of reference locations, replacing step b) by step b2), wherein
b2) retrieving from the storage device (300) at least a set of n-tuples (612, 613) associated to a plurality of second locations (512, 513) of the second set (520).

3. Method according to claim 1 or 2,
wherein the centre n-tuple (619) is the mass centre of the nearest n-tuples (614, 615) or the weighted mass centre of the nearest n-tuples (614, 615).

4. Method according to claim 1, 2, or 3, further comprising the steps of:
- repeating steps c) and d) for a predefined number of subsets comprising nearest n-tuples (614, 615), wherein each of said subsets has a different cardinality;
- selecting, after step e), the centre n-tuple (619) for the subset with highest linearity estimation, of the predefined number of subsets comprising nearest second locations (514,515).

5. Method according to claim 4,
wherein the cardinality of subsets comprising nearest n-tuples (625, 614, 615) is between 5 and 200, preferably between 10 and 60, most preferably between 20 and 40, elements.

6. Method according to one of the preceding claims,
wherein the first computational procedure is further based on determining a centre n-tuple (619) associated to a centre location (519) of the nearest second locations (514, 515), wherein, after computing a first line that is the linear correlation of the nearest second locations (514, 515) and a second line that is perpendicular on the first line, linearity estimation is result of the quotient of the squares of the distances to the first line and the squares of the distances to the second line.

7. Method according to one of the preceding claims,
wherein the linearity estimation is result of an excentricity computation of the nearest n-tuples (614, 615).

8. Method according to one of the preceding claims,
wherein uncertainties of the first reference locations (511), of the second locations (521, 522), and of border elements (551) are numerically considered.

9. Method according to one of the preceding claims,
wherein both the first and the second set (510, 520) of reference locations (511, 521, 522) is determined by moving the moveable object (10) in a physical area, by determining each reference location (511, 521, 522) and storing the n-tuples (611, 621, 622) associated to the reference locations (511, 521, 522) in the storage device (300).

10. Moveable object (10) with an electronic control unit (20) that is able to execute the method according to claim 1 to 9.

## Patentansprüche

1. Verfahren zum Bestimmen mindestens eines Teils einer Grenze (550) für ein bewegliches Objekt (10) in einem physikalischen Bereich unter Verwendung mindestens eines ersten geordneten Satzes (510) an Referenzstellen des physikalischen Bereichs,
wobei die Grenze (550) einen Satz an Referenzstellen (551, 552) des physikalischen Bereichs aufweist,
wobei die Referenzstellen des ersten Satzes (510) einem Satz an entsprechenden n-Tupeln (610) zugeordnet sind, wobei der Satz der n-Tupel (610) die Positionen der entsprechenden Referenzstellen (510) in dem physikalischen Bereich spezifiziert,
wobei der Satz der n-Tupel (610), der den Referenzstellen des ersten Satzes (510) zugeordnet ist, in einer Speichervorrichtung (300) gespeichert ist,
**dadurch gekennzeichnet, dass** das Verfahren mindestens die folgenden Schritte umfasst:
a) ein Abrufen mindestens eines n-Tupels (611) aus der Speichervorrichtung (300), das einer ersten Referenzstelle (511) des ersten Satzes (510) zugeordnet ist,
b) ein Abrufen mindestens eines Satzes an n-Tupeln (612, 613) aus der Speichervorrichtung (300), die einer Vielzahl an zweiten Stellen (512, 513) des ersten Satzes (510) zugeordnet sind,
c) ein Auswählen einer Teilmenge aus der Vielzahl der n-Tupel (612, 613), die den zweiten Stellen (512, 513) zugeordnet sind, wobei die Teilmenge in Bezug auf das n-Tupel (611), das der ersten Stelle (511) zugeordnet ist, nächste n-Tupel (614, 615) aufweist, die den nächsten zweiten Stellen (514, 515) zugeordnet sind,
d) ein Berechnen einer Linearitätsabschätzung unter Verwendung einer ersten Berechnungsprozedur der nächsten n-Tupel (614, 615), die den nächsten zweiten Stellen (514, 515) zugeordnet sind,
e) ein Bestimmen eines mittleren n-Tupels (619), das einer mittleren Stelle (519) der nächsten zweiten Stellen (525, 526) zugeordnet ist, und
- ein Speichern des mittleren n-Tupels (619), das der mittleren Stelle (519) zugeordnet ist, in der Speichervorrichtung (300) als ein Randelement (551), das ein Teil des Randes (550) ist, wenn die Linearitätsabschätzung über einem vorbestimmten Schwellenwert liegt,
wobei das Verfahren ferner ein Verwenden eines dritten geordneten Satzes an Referenzstellen (540) umfasst, der einem Satz entsprechender dritter geordneter Sätze an n-Tupeln (640) zugeordnet ist, das die Schritte umfasst:
- ein Speichern des mittleren n-Tupels (619), das der mittleren Stelle (519) zugeordnet ist, in der Speichervorrichtung (300) nach dem Schritt e) als nicht ein lückenhaftes n-Tupel (641), das einem nicht lückenhaften Element (541) zugeordnet ist, das ein Teil des dritten geordneten Satzes an Referenzstellen (540) ist, wenn die Linearitätsabschätzung über dem vorbestimmten Schwellenwert liegt, oder
- ein Speichern des mittleren n-Tupels (619), das der mittleren Stelle (519) zugeordnet ist, in der Speichervorrichtung (300) als ein Lücken-n-Tupel (642), das einem Lückenelement (542) zugeordnet ist, das ein Teil des dritten Satzes an Referenzstellen (540) ist, wenn die Linearitätsabschätzung unter dem vorbestimmten Schwellenwert liegt, als ein Teil des dritten geordneten Satzes an n-Tupeln (640), und
- ein Berechnen eines Eck-n-Tupels (649), das einem Eckelement (549) zugeordnet ist, das ein Teil der Grenze (550) ist, unter Verwendung einer zweiten Rechenprozedur, wobei die zweite Rechenprozedur auf Lücken-n-Tupeln (642) und Nicht-Lücken-n-Tupeln (641) basiert, und
- ein Verwenden der Teilmenge der Nicht-Lücken-n-Tupel (641) und der Lücken-n-Tupel (642), die ein Teil des dritten geordneten Satzes der Referenzstellen (540) sind,
wobei die zweite Berechnungsprozedur für jede Teilmenge der Lücken-n-Tupel (642) das Eck-n-Tupel (649) bestimmt, das dem Eckelement (549) zugeordnet ist, das ein Teil der Grenze (550) ist, indem
eine erste lineare Korrelationslinie der Nicht-Lücken-n-Tupel (641) vor der Teilmenge der Lücken-n-Tupel (642) und eine zweite lineare Korrelationslinie der Nicht-Lücken-n-Tupel (641) nach der Teilmenge der Lücken-n-Tupel (642) und das Eck-n-Tupel (649) als ein Schnittpunkt der ersten linearen Korrelationslinie und der zweiten linearen Korrelationslinie berechnet wird.

2. Verfahren nach Anspruch 1, das umfasst
- ein Verwenden eines zweiten Satzes (520) an Referenzstellen, der den ersten geordneten Satz (510) der Referenzstellen enthalten kann,
- ein Ersetzen von dem Schritt b) durch einen Schritt b2), wobei
b2) ein Abrufen mindestens eines Satzes an n-Tupeln (612, 613), die einer Vielzahl an zweiten Stellen (512, 513) des zweiten Satzes (520) zugeordnet sind, aus der Speichervorrichtung (300) umfasst.

3. Verfahren nach Anspruch 1 oder 2, wobei das mittlere n-Tupel (619) das Massenzentrum der nächsten n-Tupel (614, 615) oder das gewichtete Massenzentrum der nächsten n-Tupel (614, 615) ist.

4. Verfahren nach Anspruch 1, 2 oder 3, das ferner die Schritte umfasst:
- ein Wiederholen der Schritte c) und d) für eine vorbestimmte Anzahl an Teilmengen, die die nächsten n-Tupel (614, 615) aufweisen, wobei jede der Teilmengen eine unterschiedliche Kardinalität aufweist,
- ein Auswählen des mittleren n-Tupels (619) für die Teilmenge mit der höchsten Linearitätsabschätzung nach dem Schritt e) der vorbestimmten Anzahl von Teilmengen, die die nächsten zweiten Stellen (514, 515) aufweisen.

5. Verfahren nach Anspruch 4, wobei die Kardinalität der Teilmengen, welche die nächste n-Tupel (625, 614, 615) aufweisen, zwischen 5 und 200 Elementen, bevorzugt zwischen 10 und 60 Elementen und am meisten bevorzugt zwischen 20 und 40 Elementen liegt.

6. Verfahren nach einem der vorhergehenden Ansprüche,
wobei die erste Berechnungsprozedur ferner auf dem Bestimmen eines mittleren n-Tupels (619) basiert, das einer mittleren Stelle (519) der nächsten zweiten Stellen (514, 515) zugeordnet ist,
wobei nach dem Berechnen einer ersten Linie, die die lineare Korrelation der nächsten zweiten Stellen (514, 515) und einer zweiten Linie, die senkrecht auf der ersten Linie ist, die Linearitätsabschätzung das Ergebnis des Quotienten der Quadrate der Abstände zu der ersten Linie und der Quadrate der Abstände zu der zweiten Linie ist.

7. Verfahren nach einem der vorhergehenden Ansprüche, wobei die Linearitätsabschätzung das Ergebnis einer Exzentrizitätsberechnung der nächsten n-Tupel (614, 615) ist.

8. Verfahren nach einem der vorhergehenden Ansprüche, wobei Unsicherheiten der ersten Referenzstellen (511), der zweiten Stellen (521, 522) und der Randelemente (551) numerisch berücksichtigt werden.

9. Verfahren nach einem der vorhergehenden Ansprüche, wobei sowohl der erste als auch der zweite Satz (510, 520) der Referenzstellen (511, 521, 522) durch ein Bewegen des beweglichen Objekts (10) in einem physikalischen Bereich, durch ein Bestimmen der jeweiligen Referenzstelle (511, 521, 522) und durch ein Speichern der n-Tupel (611, 621, 622), die den Referenzstellen (511, 521, 522) zugeordnet sind, in der Speichervorrichtung (300) bestimmt wird.

10. Bewegliches Objekt (10) mit einer elektronischen Steuereinheit (20), die das Verfahren nach einem der Ansprüche 1 bis 9 ausführen kann.

## Revendications

1. Procédé pour déterminer au moins une partie de la bordure (550) pour un objet mobile (10) dans une zone physique en utilisant au moins un premier ensemble ordonné (510) de lieux de référence de la zone physique,
dans lequel la bordure (550) comprend un ensemble de lieux de bordure (551, 552) de la zone physique, dans lequel les lieux de référence du premier ensemble (510) sont associés à un ensemble de n-uplets (610) correspondants, dans lequel l'ensemble de n-uplets (610) spécifie les positions des lieux de référence correspondants (510) dans la zone physique,
dans lequel l'ensemble de n-uplets (610) associés aux lieux de référence du premier ensemble (510) sont stockés dans un dispositif de stockage (300),
**caractérisé en ce que** ledit procédé comprend au moins les étapes consistant à :
a) retrouver dans le dispositif de stockage (300) au moins un n-uplet (611) associé à un premier lieu de référence (511) du premier ensemble (510) ;
b) retrouver dans le dispositif de stockage (300) au moins un ensemble de n-uplets (612, 613) associés à une pluralité de seconds lieux (512, 513) du premier ensemble (510) ;
c) sélectionner dans la pluralité de n-uplets (612, 613) associés aux seconds lieux (512, 513) un sous-ensemble comprenant les plus proches, en relation avec le n-uplet (611) associé au premier lieu (511), n-uplets (614, 615) associés aux seconds lieux les plus proches (514, 515) ;
d) calculer une estimation de linéarité, en utilisant une première procédure de calcul, des n-uplets les plus proches (614, 615) associés aux seconds lieux les plus proches (514, 515) ;
e) déterminer un n-uplet central (619) associé à un lieu central (519) des seconds lieux les plus proches (525, 526), et
stocker le n-uplet central (619) associé au lieu central (519) dans le dispositif de stockage (300) comme élément de bordure (551) qui fait partie de la bordure (550) si l'estimation de linéarité est supérieure à un seuil prédéfini,
le procédé comprenant en outre les étapes consistant à utiliser un troisième ensemble ordonné de lieux de référence (540), associé à un ensemble de troisième ensemble [sic] ordonné correspondant de n-uplets (640) qui comprend les étapes consistant à :
- stocker, après l'étape e), le n-uplet central (619) associé au lieu central (519) dans le dispositif de stockage (300) comme n-uplet sans intervalle (641) associé à un élément sans intervalle (541) qui fait partie du troisième ensemble ordonné de lieux de référence (540), si l'estimation de linéarité est supérieure au seuil prédéfini, ou
stocker le n-uplet central (619) associé au lieu central (519) dans le dispositif de stockage (300) comme n-uplet à intervalle (642) associé à un élément à intervalle (542) qui fait partie du troisième ensemble ordonné de lieux de référence (540), si l'estimation de linéarité est inférieure au seuil prédéfini, comme partie du troisième ensemble ordonné de n-uplets (640), et
- calculer un n-uplet de coin (649) associé à un élément de coin (549) qui fait partie de la bordure (550), en utilisant une seconde procédure de calcul, dans laquelle la seconde procédure de calcul est basée sur les n-uplets à intervalle (642) et les n-uplets sans intervalle (641), et
utiliser le sous-ensemble de n-uplets sans intervalle (641) et de n-uplets à intervalle (642) qui font partie du troisième jeu ordonné de lieux de référence (540), dans lequel la seconde procédure de calcul détermine pour chaque sous-ensemble de n-uplets à intervalle (642) le n-uplet de coin (649) associé à l'élément de coin (549) qui fait partie de la bordure (550),
en calculant une première ligne de corrélation linéaire des n-uplets sans intervalle (641), avant ledit sous-ensemble de n-uplets à intervalle (642) et une seconde ligne de corrélation linéaire des n-uplets sans intervalle (641) après ledit sous-ensemble de n-uplets à intervalle (642) et le n-uplet de coin (649) comme intersection de la première ligne de corrélation linéaire et de la seconde ligne de corrélation linéaire.

2. Procédé selon la revendication 1,
utilisant un second ensemble (520) de lieux de référence, qui peut inclure le premier ensemble ordonné (510) de lieux de référence, en remplaçant l'étape b) par l'étape b2), dans laquelle
b2) retrouver dans le dispositif de stockage (300) au moins un ensemble de n-uplets (612, 613) associés à une pluralité de seconds lieux (512, 513) du second ensemble (520).

3. Procédé selon la revendication 1 ou 2,
dans lequel le n-uplet central (619) est le centre de masse des n-uplets les plus proches (614, 615) ou le centre de masse pondéré des n-uplets les plus proches (614, 615).

4. Procédé selon la revendication 1, 2 ou 3, comprenant en outre les étapes consistant à :
- répéter les étapes c) et d) pour un nombre prédéfini de sous-ensembles comprenant les n-uplets les plus proches (614, 615) dans lesquels chacun des sous-ensembles a une cardinalité différente ;
- sélectionner, après l'étape e), le n-uplet central (619) pour le sous-ensemble ayant la plus forte estimation de linéarité, parmi le nombre prédéfini de sous-ensembles comprenant les seconds lieux les plus proches (514, 515).

5. Procédé selon la revendication 4,
dans lequel la cardinalité des sous-ensembles comprenant les n-uplets les plus proches (625, 614, 615) est entre 5 et 200, de préférence entre 10 et 60, et plus préférentiellement entre 20 et 40, éléments.

6. Procédé selon l'une des revendications précédentes,
dans lequel la première procédure de calcul est en outre basée sur la détermination d'un n-uplet central (619) associé à un lieu central (519) des seconds lieux les plus proches (514, 515),
dans lequel, après avoir calculé une première ligne qui est la corrélation linéaire des seconds lieux les plus proches (514, 515) et une seconde ligne qui est perpendiculaire à la première ligne, l'estimation de linéarité est le résultat du quotient des carrés des distances à la première ligne et des carrés des distances à la seconde ligne.

7. Procédé selon l'une des revendications précédentes,
dans lequel l'estimation de linéarité est le résultat d'un calcul d'excentricité des n-uplets les plus proches (614, 615).

8. Procédé selon l'une des revendications précédentes,
dans lequel les incertitudes des premiers lieux de référence (511), des seconds lieux (521, 522) et des éléments de bordure (551) sont considérées numériquement.

9. Procédé selon l'une des revendications précédentes,
dans lequel le premier comme le second ensembles (510, 520) de lieux de référence (511, 521, 522) sont déterminés en déplaçant l'objet mobile (10) dans une zone physique, en déterminant chaque lieu de référence (511, 521, 522) et en stockant les n-uplets (611, 621, 622) associés aux lieux de référence (511, 521, 522) dans le dispositif de stockage (300).

10. Objet mobile (10) avec une unité de contrôle électronique (20) capable d'exécuter le procédé selon les revendications 1 à 9.
